# DEMANDE DE BREVET EUROPEEN

(11) **EP 1 404 138 A1**
(43) Date de publication de la demande: **31.03.2004**
(21) Numéro de dépôt: 03291875.7
(22) Date de dépôt: 29.07.2003
(51) Int. Cl.: H04Q 7/22

(54) **Equipement et procédé de gestion d'informations d'état pour la transmission de données dans un réseau téléphonique**

(30) Priorité: 30.07.2002 FR 0209688
(71) Demandeur: Cegetel Groupe, 75008 Paris (FR)
(72) Inventeur: Bensimon, Mickael, 38100 Grenoble (FR); Prunel, Nicolas, 38100 Grenoble (FR)
(74) Mandataire: Debay, Yves

(57) **Abrégé**

La présente invention concerne un procédé de transmission de données dans un réseau téléphonique de transmission de données (1), depuis un serveur (3) vers au moins un terminal (11) du réseau, caractérisé par le fait que :
- le serveur (3) acquiert, en provenance d'organes de transmission de trafic du réseau (1), des informations d'état du réseau (1), le réseau (1) déterminant pour cela des informations d'état spécifiques à l'activité téléphonique du terminal (11) et les fournissant à titre d'informations d'état du réseau, puis
- le serveur (3) compare les informations d'état du réseau à au moins un critère pré-établi d'état du réseau (1), pour retarder la transmission des données vers ledit terminal (11) tant que l'état du réseau (1) ne répond pas à au moins un critère d'état.

## Description

La présente invention concerne la transmission de données dans un réseau téléphonique de transmission de données.

Les réseaux téléphoniques ont initialement offert essentiellement un service de transmission de la voix, associé à un service de transmission de données n'offrant qu'un débit très limité. On peut par exemple songer au service Minitel.

Les réseaux radiotéléphoniques apparus ensuite, comme le réseau GSM, ont de même offert un canal de transmission de données à faible débit. Les utilisateurs pouvaient ainsi émettre des messages courts SMS.

Avec le développement du réseau informatique Internet, il est apparu que les réseaux téléphoniques ne pouvaient satisfaire les besoins des abonnés en bande passante et en types de protocoles pour des échanges de données à haut débit, c'est-à-dire pour transmettre rapidement des fichiers de volume important.

Dans le cas des réseaux radio, le développement du réseau GPRS vise à apporter une amélioration, par le fait qu'il offre une bande passante accrue, en attendant le réseau UMTS.

La transmission des données dans les réseaux s'effectue maintenant en mode paquet, ce qui autorise les terminaux à rester connectés en permanence au réseau, puisqu'ils n'en immobilisent pas les ressources en l'absence de transmission de paquets. Les terminaux restent virtuellement connectés et ils peuvent ainsi être joints sans délai.

Cette possibilité d'accès rapide aux terminaux permet d'offrir de nouveaux services, par exemple la fourniture automatique de données d'information depuis des serveurs spécialisés. L'utilisateur d'un terminal peut ainsi par exemple s'abonner auprès d'un fournisseur de service lui indiquant sans délai l'apparition d'événements d'un type déterminé, par exemple des événements sportifs, politiques, ou encore le franchissement d'un seuil de cours d'une valeur en bourse. Ce type de service est appelé « push » (pousser), du fait que l'information est « poussée » automatiquement vers le terminal sans que son utilisateur ait besoin de la demander expressément, c'est-à-dire sans devoir la « retirer » du serveur. L'exploitation « push » évite ainsi les requêtes inutiles de la part de l'utilisateur pour s'enquérir de l'existence éventuelle d'informations en attente dans le serveur. Le terminal reçoit ainsi automatiquement les données d'information, en mode masqué à l'utilisateur, et il le signale ensuite à celui-ci.

Hormis la convivialité que cela apporte, l'absence de telles requêtes évite aussi l'encombrement du réseau. Toutefois, comme le serveur émet les paquets d'informations à des instants aléatoires, sans aucune concertation ou synchronisation avec le terminal destinataire, cette émission de données d'information intervient parfois lorsque le terminal communique par ailleurs avec un correspondant en échangeant des paquets de données. Le trafic du terminal se trouve ainsi momentanément accru pendant la réception des informations provenant du serveur, ce qui peut provoquer une dégradation de la qualité de service.

Cette dégradation peut se manifester par des collisions entre applications et par des fluctuations réduisant le débit des données échangées avec le correspondant, c'est-à-dire un accroissement des temps de chargement. Cela représente une gêne nettement perceptible dans le cas de gros fichiers de données, échangés avec le correspondant ou reçus du serveur. Le même problème se poserait si le terminal appelait cycliquement et automatiquement le serveur pour s'enquérir de l'existence de données à retirer (« pull »).

En outre, il se peut que le terminal se trouve temporairement isolé du réseau, par le fait que son utilisateur l'a mis en veille ou que, dans le cas d'un réseau radiotéléphonique, il est sorti des zones radio couvertes. En pareil cas, les appels du serveur encombrent inutilement le réseau et en consomment les ressources.

La présente invention vise à permettre, dans le cadre d'un échange automatique de données, à des instants a priori aléatoires, entre un terminal et un serveur, en mode masqué à l'utilisateur du terminal, d'éviter de perturber le trafic du réseau et en particulier, mais non exclusivement, le trafic du terminal.

A cet effet, l'invention concerne tout d'abord un procédé de transmission de données dans un réseau téléphonique de transmission de données, depuis un serveur vers au moins un terminal du réseau, caractérisé par le fait que :
- le serveur acquiert, en provenance d'organes de transmission de trafic du réseau, des informations d'état du réseau, le réseau déterminant pour cela des informations d'état spécifiques à l'activité téléphonique du terminal et les fournissant à titre d'informations d'état du réseau, puis
- le serveur compare les informations d'état du réseau à au moins un critère pré-établi d'état du réseau, pour retarder la transmission des données vers ledit terminal tant que l'état du réseau ne répond pas à au moins un critère d'état.

On notera que, par terminal, on entend désigner tout type d'équipement relié au réseau.

Ainsi, alors qu'un terminal ne fournit au serveur aucune information sur son état d'accessibilité et d'occupation, qui permettrait au serveur d'émettre aux instants les plus favorables, c'est le réseau lui-même qui fournit ce type d'informations, permettant donc au serveur de se synchroniser de façon que son trafic soit émis en quelque sorte en opposition de phase avec celui du terminal, ou au moins ses pointes de trafic, et cette émission intervenant à bon escient, lorsque ce dernier est relié au réseau. Bref, le serveur peut ainsi n'émettre que lorsque le terminal dispose, pour la réception, des ressources réseau nécessaires, en bande passante ou en puissance de traitement. De même, le réseau peut signaler au serveur que son infrastructure est proche de la saturation, pour ainsi commander un lissage de son trafic, en commandant au serveur de retarder son émission.

On peut considérer que l'invention consiste à intégrer fonctionnellement le serveur dans un réseau de signalisation sémaphore, « couvrant », ou doublant, la partie transmission du réseau concerné, pour ainsi disposer des informations voulues sur l'état du réseau téléphonique. On rappellera qu'un réseau de signalisation sémaphore sert entre autres à détecter l'état d'occupation d'un terminal appelé, et à le faire sonner, une voie de communication de parole n'étant établie qu'en cas de réponse de l'appelé. On évite ainsi des allocations inutiles de ressources du réseau. De façon classique, les réseaux sémaphores sont de type fermé, leurs informations étant exclusivement réservées aux centraux du réseau.

Il convient de noter que l'invention couvre aussi des variantes de la technique "push". En effet, le problème à l'origine de la présente invention concerne le fait que le serveur provoque une augmentation de trafic au niveau du terminal. Toutefois, les données émises par le serveur peuvent n'avoir qu'un effet indirect sur le trafic, en n'étant que de simples télécommandes, commandant au terminal de se relier à un autre correspondant, serveur ou autre, pour échanger des données, dans un sens ou l'autre. Bref, le domaine de l'invention n'est pas limité au mode "push".

L'invention peut avantageusement être mise en oeuvre au moyen d'un gestionnaire effectuant l'acquisition des informations d'état et les retransmettant au serveur. Le gestionnaire, localisé ou réparti, peut être un serveur du réseau ou être intégré, ou associé, au serveur utilisateur.

Dans un mode de mise en oeuvre du procédé, le réseau acquiert au moins une partie des informations d'état auprès d'organes de transmission qui sont des centres de commutation du réseau.

En variante ou en complément, le réseau acquiert au moins une partie des informations d'état au moyen de sondes de surveillance de trafic disposées sur des artères de communication du réseau, en particulier aux différentes interfaces suivantes :
- les interfaces Air (ou Um), situées chacune entre une station mobile (MS) et la station de base (BTS) de la cellule géographique dans laquelle se trouve cette station mobile,
- les interfaces Abis, situées chacune entre une station de base (BTS) et le contrôleur de station de base (BSC) correspondant,
- les interfaces A, situées chacune entre un contrôleur de station de base (BSC) et le commutateur du service mobile (MSC) correspondant,
- les interfaces "CCITT n° 7 téléphonique" (ISUP, TUP, SSUTR2), situées chacune entre un commutateur du service mobile (MSC) et un centre de transit,
- les interfaces MAP (pour Mobile Application Part en langue anglaise), situées chacune entre un commutateur du service mobile (MSC) et une base de données spécialisée (HLR, VLR, AuC, EIR).

Le serveur ou le gestionnaire peut être prévu pour requérir du réseau des informations d'état voulues, et en particulier commander, dans le réseau, la fourniture en retour d'informations de rafraîchissement d'informations d'état, par exemple par envoi, dans le réseau, de stimuli d'activation du terminal. Les stimuli provoquent l'établissement d'un contexte d'une nouvelle liaison de données dans le réseau, contexte qui est détecté pour effectuer un rafraîchissement des informations d'état du réseau spécifiques au terminal.

En pareil cas, selon un premier mode, les stimuli activent une application du terminal, par exemple une application SIM Toolkit.

Selon un second mode, les stimuli atteignent d'abord un centre de commutation du réseau et lui commandent de les transformer en un message émis d'activation du terminal, lui notifiant qu'il doit appeler un centre, pour y récupérer des données.

On conçoit que l'invention s'applique parfaitement, mais de façon non limitative, aux réseaux cellulaires, par exemple GPRS ou UMTS, mais qu'elle s'applique aussi aux réseaux radio formés d'une constellation de satellites.

L'invention concerne aussi un gestionnaire d'informations d'état d'un réseau téléphonique pour la mise en oeuvre du procédé de l'invention, comportant des moyens de gestion agencés pour recevoir des informations d'état du réseau et les retransmettre à des serveurs de données d'information.

L'invention sera mieux comprise à l'aide de la description suivante d'un réseau dans lequel est mis en oeuvre le procédé de l'invention, en référence au dessin annexé, sur lequel :

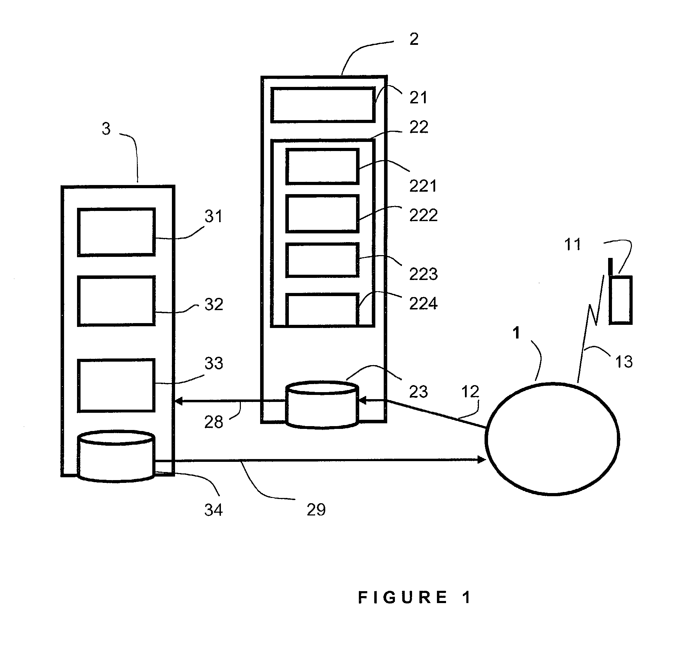

- la figure 1 est une vue très schématique représentant un réseau de radiotéléphonie, ici le réseau cellulaire GPRS, relié, dans l'exemple à travers un gestionnaire des informations d'état du réseau, à un serveur de fourniture de données d'information en mode « push » mettant en oeuvre le procédé de l'invention,

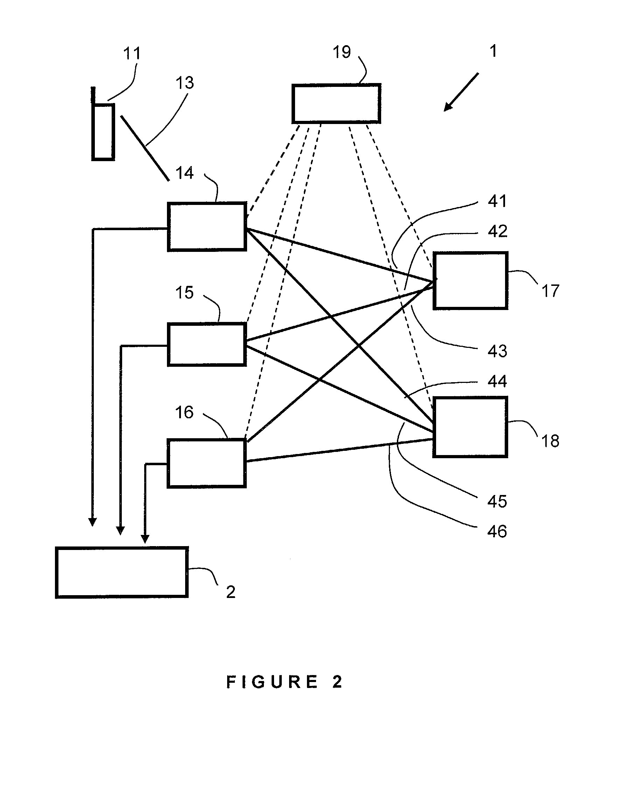

- la figure 2 représente le réseau de la figure 1 et illustre un procédé de récupération d'informations d'état du réseau, selon un premier mode, auprès de centres de commutation du réseau,

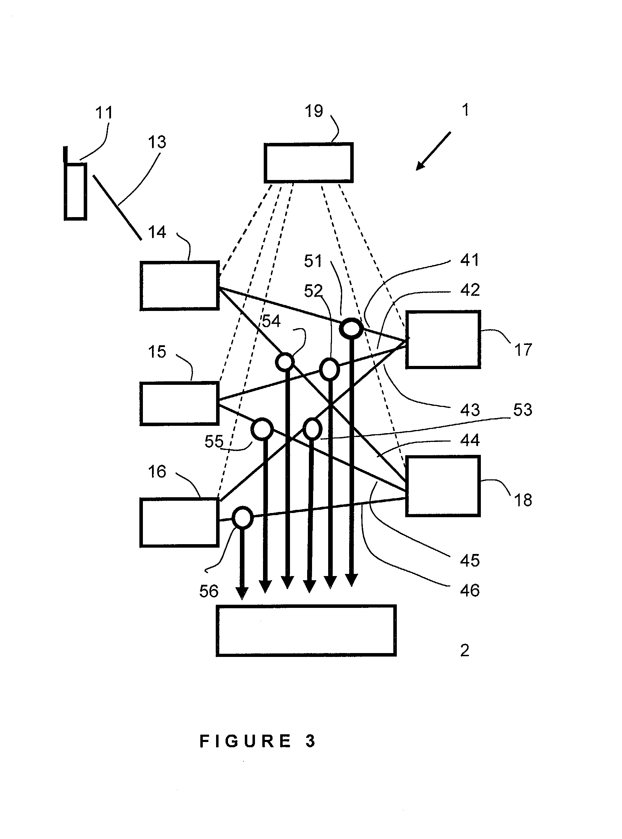

- la figure 3 illustre le procédé de récupération d'informations d'état du réseau, selon un second mode, par des sondes disposées sur des artères du réseau (interfaces),

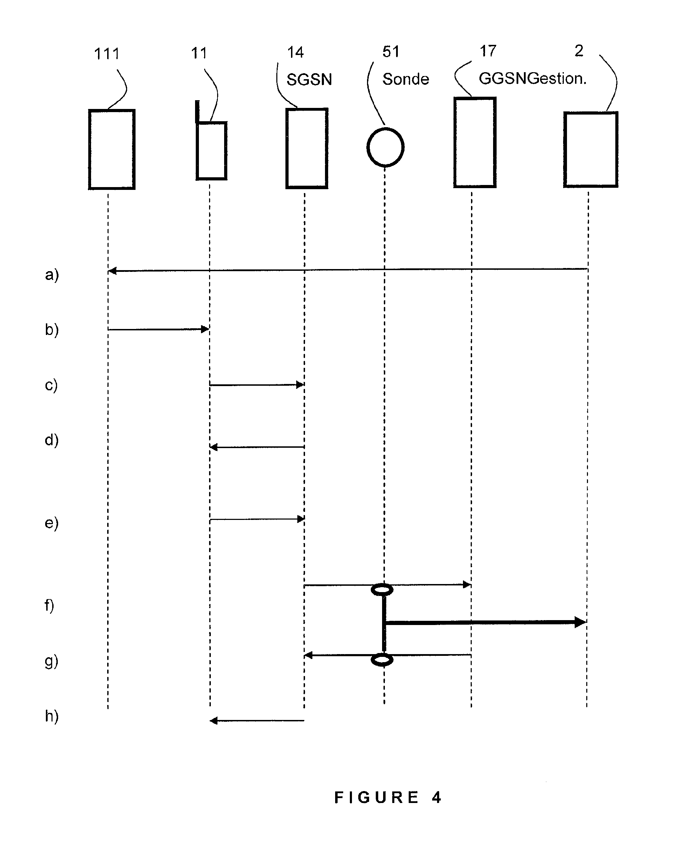

- la figure 4 est un diagramme d'échange de signalisations illustrant un procédé de rafraîchissement des informations d'état du réseau, rafraîchissement provoqué par l'envoi, depuis le gestionnaire, de stimuli d'activation du terminal qui, dans un premier mode de mise en oeuvre, y activent une application afin de provoquer de sa part l'établissement d'une liaison en vue d'analyser des caractéristiques du trafic correspondant, et

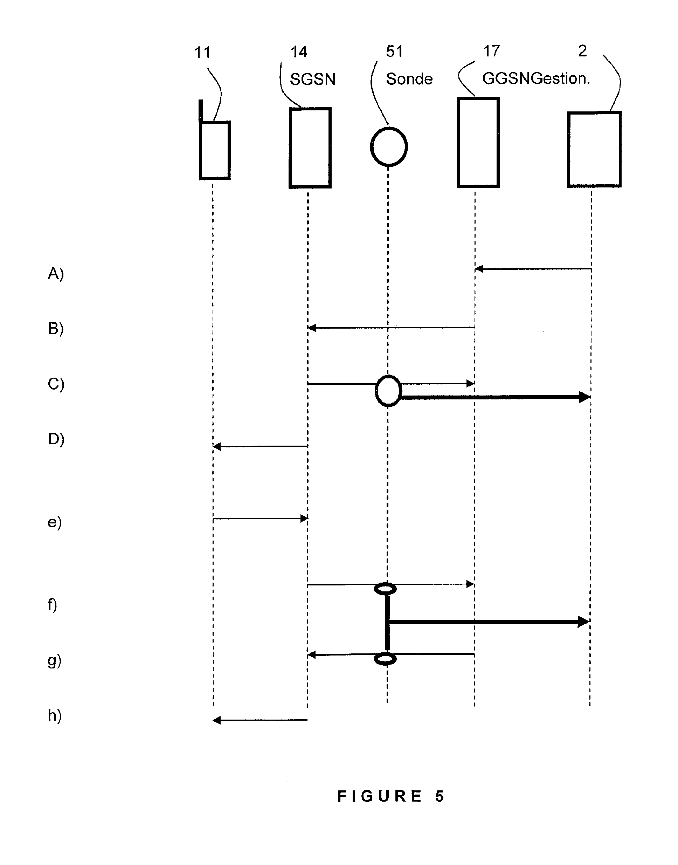

- la figure 5 est un diagramme homologue de celui de la figure 4, illustrant un second mode de mise oeuvre du procédé de rafraîchissement ci-dessus, correspondant à des stimuli commandant, dans les centres de commutation du réseau, l'envoi d'un message vers un terminal visé, lui notifiant que des données, dont il est destinataire y sont en attente.

L'infrastructure pour la mise en oeuvre de l'invention va d'abord être décrite et son fonctionnement expliqué, puis les deux procédés ci-dessus vont successivement être exposés, dans chacun de leurs deux modes.

La figure 1 représente un réseau téléphonique de transmission de données 1, et plus précisément dans cet exemple un réseau radiotéléphonique qui est ici cellulaire, à savoir le réseau GPRS, qui s'appuie sur l'infrastructure du réseau GSM.

Le choix d'un réseau de type radio dans cet exemple provient du fait qu'il permet d'exposer en particulier le cas, relativement fréquent, d'un terminal radio mobile non localisé, c'est-à-dire temporairement non rattaché ("idle") au réseau 1, du fait d'un passage dans une zone d'ombre ou par une action volontaire de l'utilisateur, qui en a coupé l'alimentation. Un cas homologue à ce dernier cas peut toutefois se présenter dans un réseau filaire, par exemple en présence d'un bus de type S0, sur lequel plusieurs terminaux peuvent individuellement être raccordés et déconnectés ou mis hors tension.

Un serveur de données 3 est relié au réseau 1 pour accéder à des terminaux mobiles 11, dont un seul est représenté. Le serveur 3 comporte une unité centrale 31 commandée par des logiciels d'une mémoire 32, une table 33 de critères (au moins un) d'état du réseau 1, accessible par les logiciels de la mémoire 32 et une mémoire de données à émettre 34.

Dans cet exemple, le serveur 3 est relié au réseau 1 à travers un gestionnaire d'interface ou frontal 2 de gestion d'informations d'état du réseau 1, c'est-à-dire que l'acquisition des informations d'état par le serveur 3 s'effectue ici à travers le gestionnaire 2. Le gestionnaire 2 comporte une unité centrale 21 commandée par des logiciels d'une mémoire 22, et une mémoire 23 de données d'état du réseau 1. Par commodité, les logiciels en mémoire portent ici la même référence que celle-ci mais entre parenthèses. Les logiciels (22) comprennent entre autres :
- des logiciels 221 d'interrogation sur l'état du réseau 1,
- des logiciels d'activation 222 agencés pour lancer dans le réseau 1 des stimuli de rafraîchissement des informations d'état,
- des logiciels 223 d'agrégation d'informations d'état du réseau 1, afin de fournir au serveur 3 des données de synthèse de l'état, et
- des logiciels 224 d'intégration, dans le temps, d'informations d'état du réseau, afin de fournir au serveur 3 des données de synthèse de l'état.

Une mémoire de travail, non représentée, de l'unité centrale 21 stocke les diverses commandes ou requêtes ou signaux de signalisation équivalents échangés avec le réseau 1 et avec le serveur 3. Les moyens matériels et logiciels d'interface de communication du gestionnaire 2 et du serveur 3 ne sont pas ici dessinés et décrits, car l'invention ne porte pas spécifiquement sur eux.

La présence du gestionnaire 2 dans cet exemple présente l'avantage de centraliser les tâches de gestion, afin d'éviter au maximum des modifications à cet effet dans le réseau 1. Cela permet en outre un travail en temps masqué d'échange de données avec le réseau 1.

Les données d'information du serveur 3 peuvent être de tout type de fichier, que ce soit du texte, de la télécopie, des signaux sonores ou de l'image. Comme on le verra par la suite, leur nature peut toutefois avoir une influence perturbatrice plus ou moins forte dans le réseau 1 et en particulier au niveau du terminal 11, du fait du volume de données impliqué et du protocole utilisé, susceptible d'y consommer trop de ressources de traitement.

Vis-à-vis du réseau 1, le gestionnaire 2 peut être fonctionnellement considéré de deux façons différentes. D'une part, le gestionnaire 2 peut être considéré comme une interface associée au serveur 3, interface disposant, auprès du réseau 1, de droits pour l'interroger sur son état. D'autre part, et bien que dessiné en dehors du réseau 1, le gestionnaire 2 peut être considéré comme faisant fonctionnellement partie du réseau 1, en tant que serveur spécialisé pour répondre au serveur 3. Il en est de même pour une liaison radio 13 reliant le terminal 11 au réseau 1.

Le serveur 3 est en fait relié au réseau 1 par deux types de liaisons. Une liaison 12, 28 du premier type, principalement sortante vis-à-vis du réseau 1, traverse, comme représenté, le gestionnaire 2 et concerne la fourniture, au serveur 3, d'informations sur l'état du réseau 1, fournies par celui-ci, pour mettre en oeuvre le procédé de l'invention. Il s'agit d'informations équivalentes (après traitement éventuel) à des signaux de service, à partir desquelles le serveur 3 élabore des commandes régulant, sur une liaison du second type 29, principalement entrante vis-à-vis du réseau 1, un flux de données d'information transmises automatiquement, en mode « push », vers les terminaux 11. La liaison du second type 29 est donc asservie par la liaison du premier type 28, qui joue le rôle d'une liaison sémaphore, gérant le flux incident dans le réseau 1 et ainsi évitant au mieux les contentions. On notera à ce sujet que le gestionnaire 2 pourrait aussi être utilisé par les divers centres du réseau 1, pour d'éventuels échanges de données hors temps réel, par exemple des fichiers de facturation.

On peut donc considérer que le réseau 1 commande lui-même, par les informations qu'il fournit sur la liaison sortante 12, 28, le volume de trafic qu'il reçoit par la liaison en rebouclage 29. La liaison entrante 29 a donc volontairement été dessinée comme ne traversant pas le gestionnaire 2, qui n'agit qu'en amont (28) de celle-ci, bien que rien n'interdise que la liaison 29 traverse aussi le gestionnaire 2. Les liaisons logiques de données 28 et 29 peuvent être établies sur toute sorte de support de transmission, par exemple une voie radio ou bien filaires et éventuellement portées dans ce cas par un même support physique, tel que paire torsadée, coaxial, fibre optique.

Comme exposé plus haut, le concept de l'invention est de fournir au serveur 3 des informations sur l'état du réseau 1, y compris celui des liaisons comme la liaison 13 du terminal 11.

Pour cela :
- le serveur 3 acquiert, en provenance d'organes (14 à 18, fig. 2) de transmission de trafic du réseau 1, des informations d'état du réseau 1, et
- le serveur 3 compare les informations d'état du réseau 1 à au moins un critère pré-établi d'état du réseau 1, de la table 33, pour retarder la transmission des données tant que l'état du réseau 1 ne répond pas à l'au moins un critère d'état.

Les informations d'état peuvent concerner, comme déjà indiqué, le réseau 1 dans sa globalité tout aussi bien que certains terminaux 11 identifiés, par exemple désignés préalablement par le serveur 3. Les informations d'état peuvent ainsi concerner les niveaux de charge de divers centres 14 à 18 de commutation du réseau 1, l'état d'occupation de la liaison 13 du terminal 11, l'intensité de son trafic éventuel ou encore le(s) type(s) de protocole(s) actif(s) sur la liaison 13, HTTP, FTP, par exemple, ce qui fournit une indication sur le taux de charge de traitement d'un processeur de communication du terminal 11 et donc sur son aptitude à recevoir, en plus, le flux des données d'information en attente dans le serveur 3. Par exemple, le protocole FTP monopolise toutes les ressources du terminal 11, et une émission des données du serveur 3 dans cette période serait donc néfaste. L'indication, dans les informations d'état fournies au serveur 3, de l'utilisation du protocole FTP par le terminal 11 cible est un critère de saturation du terminal 11 qui, par consultation de la table 33, interdit l'émission des données du serveur 3. L'instant d'émission est donc reporté jusqu'à un instant ultérieur pour lequel le protocole FTP sera indiqué comme n'étant pas utilisé, et dans la mesure où d'autres critères requis seront aussi satisfaits, par exemple le fait que le terminal 11 est joignable ou encore que le réseau 1 ne présente pas de niveau de saturation de trafic dépassant un seuil haut.

La table 33 contient ainsi au moins un critère de régulation du trafic susceptible d'être injecté dans le réseau 1. De préférence, il est prévu une pluralité de tels critères, exploités par les logiciels (32).

Les logiciels (32) comparent les « valeurs » des informations d'état reçues à des valeurs homologues de la table 33 pour décider d'envoyer immédiatement les données en attente ou au contraire d'en différer l'émission si l'un au moins des critères n'est pas satisfait. Un critère d'une telle décision peut, dans certains cas, être un résultat d'une combinaison de plusieurs types d'informations brutes, ou primaires, qui sont ainsi pondérées.

La table 33 peut même se substituer au moins partiellement aux logiciels 32 en constituant elle-même une table de décision, c'est-à-dire une sorte de logique combinatoire, du genre FPLA (réseau logique programmable), recevant les informations d'état des divers types et les combinant selon des règles pré-établies pour fournir directement en sortie une autorisation d'émission des données en attente dans la mémoire 34.

Le réseau 1 peut ainsi, entre autres, déterminer des informations d'état spécifiques à l'activité téléphonique du terminal 11 et les fournir à titre d'informations d'état du réseau 1. Ainsi, le réseau 1 détermine, comme informations spécifiques au terminal 11, au moins l'un des types d'informations suivants :
- état de charge de trafic d'un centre de commutation SGSN (fig. 2) auquel est rattaché le terminal 11,
- état d'accessibilité du terminal 11 (ldle/ Ready/ Standby),
- état d'occupation du terminal 11, en particulier échange courant d'un trafic de données, et si tel est le cas le type de protocole utilisé (ftp, http,...),
- débit montant du terminal 11 vers le centre de commutation, ou rattachement, SGSN,
- débit descendant du centre de commutation SGSN vers le terminal 11,
- qualité de service allouée à l'utilisateur du terminal 11.

Le réseau 1 peut surveiller des changements des informations d'état et émettre automatiquement, à destination du serveur 3, donc ici vers le gestionnaire 2, une notification de changement d'état nécessitant un rafraîchissement des informations d'état précédemment acquises. Le réseau 1 peut en particulier notifier spontanément au gestionnaire 2 la mise à jour des informations d'état ayant changé.

Le gestionnaire 2 reçoit ainsi du réseau 1 et stocke en mémoire 23 les informations d'état, pour ensuite les retransmettre au serveur 3, sur requête ou spontanément.

Les moyens de gestion 21, 22, 23 permettent ainsi au gestionnaire 2 de recevoir les informations d'état du réseau 1 et les retransmettre à des serveurs de données d'information 3, le logiciel 221 permettant l'interrogation du réseau 1 sur son état.

Le logiciel d'activation 222 permet en outre de lancer dans le réseau 1, comme expliqué plus loin, des stimuli de rafraîchissement des informations d'état.

Pour mieux mettre en valeur les informations d'état, le logiciel 223 agrège les informations d'état du réseau 1, afin de fournir des données de synthèse de l'état, sous la forme par exemple de valeurs d'un indice de disponibilité du terminal 11. L'indice a ici cinq niveaux, correspondant à un terminal :
- Indice 0 : joignable et non actif,
- Indice 1 : terminal joignable mais faible, utilisation des ressources (messagerie instantanée),
- Indice 2 : joignable mais avec des ressources réseau limitées,
- Indice 3 : joignable avec des ressources réseau utilisables et utilisées pleinement (FTP, ...),
- Indice 4 : non joignable.

Dans le même but, le logiciel 224 intègre, dans le temps, les informations d'état du réseau 1, type par type, afin de fournir au serveur 3 des données de synthèse de l'état du réseau 1.

Le procédé d'acquisition, ou d'extraction, des informations d'état du réseau 1 va maintenant être exposé, dans ses deux modes de mise en oeuvre.

Premier mode du procédé d'acquisition des informations d'état du réseau 1 (fig. 2).

Le réseau 1 peut acquérir au moins une partie des informations d'état, par exemple la « présence GPRS » d'un terminal 11, par interrogation de centres de commutation du réseau 1 adaptés à cet effet. Sur la figure 2, les références 14, 15 et 16 désignent des centres terminaux de commutation, ou de rattachement cellulaire, appelés SGSN (noeuds de service GPRS), gérant les terminaux 11 d'une cellule particulière à chacun. Les références 17 et 18 désignent des centres nodaux GGSN (noeuds passerelle GPRS) respectivement reliés aux centres SGSN 14 à 16 et les fédérant par des artères de communication haut débit 41, 42, 43 et 44, 45, 46, de divers types de supports physiques. La référence 19 désigne un centre de gestion HLR pour la localisation des terminaux 11 entre les différentes cellules.

En pareil cas, le gestionnaire 2 interroge les centres ci-dessus les plus pertinents, ou en reçoit des émissions spontanées.

Le réseau 1 acquiert au moins une partie des informations d'état auprès des centres de commutation du réseau, ici des centres de rattachement SGSN 14, 15, 16 des terminaux 11. Chaque centre SGSN 14, 15, 16 du réseau 1 stocke localement et transmet à destination du serveur 3, donc ici vers le gestionnaire 2, pour chaque terminal 11 rattaché à l'un des centres 14, 15, 16, au moins l'un des types d'informations d'état suivants :
- identifiant unique du terminal (IMSI, MSISDN),
- état d'accessibilité du terminal : « MM State » : hors service (idle), donc non joignable, repos (standby), actif (ready), donc joignable dans ces deux cas,
- localisation du terminal (par définition de la zone de routage (routing area), le numéro de cellule courante (cell-lD) lorsque le terminal est en mode « READY » ou la dernière cellule connue si le terminal est en mode repos (standby) ou hors-service (idle),
- temps de repos courant du terminal (Cellldentity-Age) ou durée depuis le dernier transfert de données,
- nombre de contextes PDP (Protocole Réseau par Paquets) c'est-à-dire de liaisons logiques,
- état de chaque contexte PDP (Actif ou Inactif),
- adresse(s) PDP allouée(s),
- niveau de qualité alloué,
- trafic montant
- trafic descendant, sous la forme éventuellement d'informations « amont » permettant de déduire le trafic montant et descendant, comme Emission du numéro N-PDU d'unité de données de protocole : « Send N-PDU Number » et Réception du numéro N-PDU « Receive N-PDU Number ».

Dans une forme d'exploitation, les centres 14 à 16 surveillent l'état courant des informations d'état pour les comparer à des informations d'état précédentes stockées localement, afin, en cas d'événement de changement d'état, d'effectuer un rafraîchissement des informations stockées localement et de déclencher d'eux-mêmes, à destination du serveur 3, ici à travers le gestionnaire 2, une émission des informations d'état courantes.

Parmi les événements à surveiller au niveau des centres 14 à 16 qui peuvent induire des changements d'état, on peut mentionner de manière non exhaustive les événements suivants :
- changement d'état d'accessibilité du terminal 11, c'est-à-dire son état GPRS,
- rattachement du terminal à un autre centre 14 à 16,
- changement de zone de routage,
- début, interruption ou fin d'un transfert de données,
- renégociation d'un niveau de qualité de service QoS (Quality of Service),
- activation ou désactivation d'un contexte de liaison.

La transmission, à destination du serveur 3, des informations stockées localement dans un centre 14 à 16 peut toutefois s'effectuer sur requête du gestionnaire 2, répétant éventuellement une même requête issue du serveur 3.

Dans le second mode de mise en oeuvre du procédé d'acquisition des informations d'état du réseau 1 (figure 3), le réseau 1 acquiert au moins une partie des informations d'état au moyen de sondes 51 à 56 de surveillance de trafic disposées sur les artères de communication 41 à 46 respectives du réseau 1, reliant les centres nodaux GGSN 17, 18 aux divers centres de rattachement 14 à 16. Les artères surveillées peuvent être les artères 41 à 46 dans leur partie liaison, ou, en cas d'impossibilité (fibres optiques) ou pour plus de facilité, leurs extrémités de départ ou d'arrivée, ou encore les interconnexions correspondantes, dans les centres nodaux GGSN 17, 18 ou autres routeurs. Il s'agit donc d'une analyse en temps réel des champs de signalisation ou de données des messages de signalisation et de données transitant dans le réseau fédérateur GPRS. Un tel second mode, à base de sondes 51 à 56, évite ainsi la nécessité de modifications dans les centres 14 à 18 du réseau 1. Le rattachement, tel que dessiné, des sorties des sondes 51 à 56 au gestionnaire 2, n'est que schématique, et emprunte en pratique des voies du réseau 1.

Les sondes 51 à 56 analysent des champs de signalisation de messages transitant sur les artères 41 à 46 pour en extraire au moins certaines des informations d'état concernant les terminaux 11, dans la mesure où ils sont actifs. Les en-têtes de paquets selon le protocole GTP (GPRS Tunel Protocole) permettent par exemple d'identifier les terminaux 11 d'après leur numéro d'identification unique IMSI dans un champ TID. Les sondes 51 à 56 analysent au moins l'une des signalisations suivantes du terminal 11 :
- requête de création de contexte de liaison, par une commande Create PDP Context Request/Response,
- requête de mise à jour de contexte de liaison, par une commande Update PDP Context Request/Response,
- requête d'effacement de contexte de liaison, par une commande Delete PDP Context Request/Response,
- requête de notification PDU, par une commande PDU Notification Request/Response,
- requête d'émission d'informations de routage réseau, par une commande Send Routing Information for GPRS Request/Response,
- requête pour noter qu'un terminal est à nouveau joignable, par une commande Note MS GPRS Présent Request/Response,
- requête d'identification, par une commande Identification Request/Response, et
- requête de contexte SGSN, par une commande SGSN context Request/Response/Acknowledge.

Les divers messages étant transmis selon divers protocoles, les sondes 51 à 56 identifient le ou les protocoles utilisés par une ou plusieurs liaisons logiques du terminal 11.

L'analyse des messages de signalisation GTP permet donc d'avoir des informations sur la présence GPRS d'un abonné, sur son adressage (IP, X25) ainsi que sur la QoS dont il bénéficie. Le protocole GTP adresse essentiellement la gestion des contextes PDP et les états GPRS (ldle/Ready/Standby) sont déduits des messages liés aux contextes PDP. Ainsi, lorsqu'un contexte PDP est activé, un utilisateur est joignable (état Ready). Le fait qu'un utilisateur devienne joignable se traduit également par la réception d'un message « Note MS GPRS Présent Request » du HLR au GGSN via la passerelle MAG/GTP et également par des échanges inter SGSN lorsque l'attachement GPRS se fait sur un nouveau SGSN.

Le rafraîchissement des informations d'état du réseau 1 va maintenant être expliqué.

Le gestionnaire 2 peut requérir du réseau 1 des informations d'état voulues, ceci suite à une requête du serveur 3 ou bien par une décision autonome. Le gestionnaire 2 peut en effet détecter que des informations d'état qu'il a reçues et stockées en mémoire 23, avec des données horodatrices, sont obsolètes passé un certain seuil de péremption de durée de stockage, détecté par comparaison avec l'instant courant.

Le gestionnaire 2 peut aussi recevoir du serveur 3 une requête pour des informations d'état du réseau 1 non disponibles en mémoire 23, et éventuellement non disponibles dans le réseau 1, faute d'activité sur la liaison 13 du terminal 11, et donc aussi inexistantes dans les artères 41 à 46 en ce qui concerne le terminal 11. Le rafraîchissement n'est alors commandé qu'après réception, par le gestionnaire 2, d'une requête d'informations d'état provenant du serveur 3.

Le gestionnaire 2 commande alors, dans le réseau 1, un rafraîchissement des informations d'état, c'est-à-dire un rafraîchissement d'informations d'état précédemment reçues ou la fourniture d'informations d'état en complément de celles déjà reçues.

Le gestionnaire 2 peut surveiller, dans le réseau 1, la disponibilité des informations d'état et il commande le rafraîchissement en cas d'indisponibilité de certaines des informations d'état, faute par exemple de trafic du terminal 11, comme indiqué ci-dessus.

Le rafraîchissement des informations d'état est commandé par envoi, dans le réseau 1, de stimuli d'activation du terminal 11, pour l'activer afin de provoquer l'établissement d'un contexte d'une nouvelle liaison de données PDP dans le réseau 1, et de détecter le contexte de liaison PDP pour effectuer un rafraîchissement des informations d'état du réseau spécifiques au terminal 11. C'est par exemple la localisation du terminal 11 au niveau d'une cellule (identité de la cellule : Cell ID) au lieu d'une localisation plus globale, au niveau d'une zone de routage. Les deux modes possibles de mise en oeuvre du procédé ci-dessus sont les suivants.

Premier mode de mise en oeuvre du procédé de rafraîchissement des informations d'état.

Selon le premier mode, les stimuli activent une application du terminal 11. Il peut s'agir d'une application SIM Toolkit ou de toute autre application cliente dans le terminal 11. Le terminal 11, attaché au réseau 1 d'un point de vue GSM, est ainsi appelé en une sorte de « paging », par exemple au moyen de message SMS, SMSCB, USSD, ou autres.

Cette application ouvre une liaison logique sur la liaison radio 13, par envoi au terminal 11 d'une commande « OPEN CHANNEL », ce qui amène la création d'un contexte de liaison PDP, qui pourra être détecté et examiné par les centres 14 à 18 ou par les sondes 51 à 56, et ainsi fournir des informations d'état rafraîchies au gestionnaire 2.

Si le terminal 11 est dans l'état GPRS repos « idle », il s'attache au réseau 1 et devient ainsi joignable. Le terminal 11 passe alors à l'état actif « ready », ce qui provoque la mise à jour de l'information de localisation à la cellule près.

Ensuite, le contexte PDP nouvellement engendré permet de rafraîchir des informations d'état telles que le niveau de qualité de service QoS négocié entre le terminal 11 et le réseau 1 ainsi que l'adresse du terminal 11 et son type, tel que IP, X25.

Des stimuli de désactivation de l'application peuvent être ultérieurement émis par le gestionnaire 2 par exemple par une commande de « CLOSE CHANNEL » pour désactiver le contexte PDP, si une temporisation de commande de désactivation de l'application considérée n'est pas prévue.

La figure 4 illustre un tel premier mode.

Cet exemple fait intervenir, de gauche à droite sur la figure, l'application GSM appelée SIM Toolkit, 111, le terminal mobile (MS) 11, le centre SGSN 14, la sonde 51 sur l'artère 41, le centre nodal GGSN 17 et le gestionnaire 2.

Les huit étapes représentées sont repérées de a) à h). Dans une première étape a), le gestionnaire 2 lance un appel (paging) vers l'application SIM Toolkit 111, afin de la déclencher ou lance un message de Requête de mise à jour d'informations d'état, « Update Information Request ». L'application 111 répond, à une deuxième étape b), par envoi d'un message « STK OPEN CHANNEL » au terminal 11. Ce dernier émet alors, à une troisième étape c), une requête d'attachement « GMM Attach Request » au SGSN 14, qui lui répond, à une quatrième étape d), par un message d'attachement « GMM Attach Response ». A une cinquième étape e), le terminal 11 y répond par envoi d'un message de demande de création de contexte de liaison PDP « SM Activate PDP Context Request ». A une sixième étape f), cette requête remonte alors au GGSN 17 par l'artère 41, où elle est détectée par la sonde 51, dans un message de demande de création de contexte PDP « GTP Create PDP Context Request », contenant un numéro IMSI, une adresse PDP, et autres, qui sont des informations d'état recherchées. Le centre GGSN 17 y répond, à une septième étape g), par un message de réponse de création de contexte « GTP Create Context Response », contenant un niveau de qualité de service QoS alloué, et autres informations d'état. La sonde 51 recueille les informations d'état ci-dessus et les transmet au gestionnaire 2, dans un message de rafraîchissement « Update Information Request ». Le centre SGSN 14 envoie ensuite au terminal 11, à une huitième étape h), un message « SM Activate PDP Context Response », fournissant le contexte requis.

Second mode de mise en oeuvre du procédé de rafraîchissement des informations d'état.

Selon le second mode, la commande d'activation d'une application du terminal 11 s'effectue indirectement par activation d'une fonction de notification existant dans réseau 1.

Les stimuli atteignent d'abord un centre de commutation ou de rattachement du réseau 1, ici un centre nodal GGSN 17, 18, et lui commandent de les transformer en un message d'activation du terminal 11, qui lui est transmis et lui notifie qu'il doit appeler le centre nodal GGSN 17, 18 pour y récupérer des données.

La figure 5 illustre ce second mode. Ainsi, à une première étape A), le gestionnaire 2 envoie au centre nodal GGSN 17 un message de requête de mise à jour, ou rafraîchissement, des informations d'état, « Update Information Request, avec un numéro IMSI de terminal 11. A une deuxième étape B), le centre nodal GGSN 17 émet, vers le centre cellulaire SGSN 14 de rattachement du terminal 11, un message de Requête de notification GTP PDU : « GTP PDU Notification Request », contenant le numéro IMSI, une adresse PDP, et autres. A une troisième étape C), le centre cellulaire SGSN 14 répond par un message de réponse en retour « GTP PDU Notification Response ». Ce message est détecté et analysé par la sonde 51, qui en recueille l'information de numéro IMSI et extrait l'information de présence du terminal 11 dans la cellule du centre SGSN 14, ces informations étant retransmises au gestionnaire 2. Si le terminal est joignable, à une quatrième étape D), le centre de rattachement SGSN 14 envoie au terminal 11 un message d'activation de contexte PD par Requête SM : « SM Request PDP Context Activation ». Les étapes cinq à huit suivantes sont semblables aux étapes e) à h) de la figure 4.

De manière générale, il a été évoqué une utilisation de l'infrastructure pour savoir quel est le moment le plus adapté pour transmettre des données à destination du client. Cependant, on peut également mentionner ici d'autres utilisations de l'infrastructure, comme par exemple :
- l'adaptation du "bearer" (CSD, GPRS, SMS) ; par exemple si un fournisseur de service "push" constate que le réseau GPRS est engorgé, il peut alors décider d'employer la technique "push" via SMS ;
- l'adaptation du format du contenu ; si par exemple l'utilisateur n'est pas occupé mais que son SGSN est fortement chargé, il est possible d'adapter le contenu à envoyer (suppression des images, modification du format HTML vers le format WML) de façon à limiter le temps de chargement du contenu pour l'utilisateur.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de transmission de données dans un réseau téléphonique de transmission de données (1), depuis un serveur (3) vers au moins un terminal (11) du réseau, **caractérisé par le fait que** :
- le serveur (3) acquiert, en provenance d'organes de transmission de trafic du réseau (1), des informations d'état du réseau (1), le réseau (1) déterminant pour cela des informations d'état spécifiques à l'activité téléphonique du terminal (11) et les fournissant à titre d'informations d'état du réseau, puis
- le serveur (3) compare les informations d'état du réseau à au moins un critère pré-établi d'état du réseau (1), pour retarder la transmission des données vers ledit terminal (11) tant que l'état du réseau (1) ne répond pas à au moins un critère d'état.

2. Procédé selon la revendication 1, dans lequel le réseau (1) détermine, comme informations spécifiques au terminal (11), au moins l'un des types d'informations suivants :
- état de charge de trafic d'un centre de commutation auquel est rattaché le terminal,
- état d'accessibilité du terminal,
- état d'occupation du terminal,
- débit montant du terminal vers le centre de commutation,
- débit descendant du centre de commutation vers le terminal,
- qualité de service allouée au terminal.

3. Procédé selon l'une des revendications 1 ou 2, dans lequel le réseau (1) surveille des changements des informations d'état et émet automatiquement, à destination du serveur (3), une notification de changement d'état nécessitant un rafraîchissement des informations d'état précédemment acquises.

4. Procédé selon la revendication 3, dans lequel le réseau (1) notifie la nécessité du rafraîchissement par transmission des informations d'état ayant changé.

5. Procédé selon l'une des revendications 1 à 4, dans lequel l'acquisition des informations d'état par le serveur (3) s'effectue à travers un gestionnaire (2) des informations d'état.

6. Procédé selon la revendication 5, dans lequel le gestionnaire (2) reçoit du réseau (1) et stocke les informations d'état.

7. Procédé selon l'une des revendications 1 à 6, dans lequel le réseau (1) acquiert au moins une partie des informations d'état auprès de centres de commutation du réseau (14, 15, 16).

8. Procédé selon la revendication 7, dans lequel chaque centre de commutation (14, 15, 16) du réseau stocke localement et transmet à destination du serveur (3), pour chaque terminal (11) rattaché au centre, au moins l'un des types d'informations d'état suivants :
- identifiant unique du terminal (IMSI, MSISDN),
- état d'accessibilité du terminal,
- localisation du terminal,
- durée depuis le dernier transfert de données,
- nombre de contextes PDP
- adresse allouée
- niveau de qualité alloué,
- trafic montant,
- trafic descendant.

9. Procédé selon la revendication 8, dans lequel les centres (14, 15, 16) surveillent l'état courant des informations d'état pour les comparer à des informations d'état précédentes stockées localement, afin, en cas d'événement de changement d'état, de rafraîchir les informations stockées localement et de déclencher, à destination du serveur (3), une émission des informations d'état courantes.

10. Procédé selon la revendication 9, dans lequel les centres (14, 15,16) surveillent l'apparition d'au moins l'un des types d'événements suivants :
- changement d'état d'accessibilité du terminal,
- rattachement à un autre centre,
- changement de zone de routage,
- début, interruption ou fin d'un transfert de données,
- renégociation d'un niveau de qualité,
- activation ou désactivation d'un contexte de liaison.

11. Procédé selon l'une des revendications 8 à 10, dans lequel la transmission, à destination du serveur (3), des informations stockées localement dans un centre (14, 15, 16) s'effectue sur requête.

12. Procédé selon l'une des revendications 1 à 11, dans lequel le réseau (1) acquiert au moins une partie des informations d'état au moyen de sondes (51 à 56) de surveillance de trafic disposées sur des artères de communication (41 à 46) du réseau (1).

13. Procédé selon la revendication 12, dans lequel les sondes (51 à 56) analysent des champs de signalisation de messages transitant sur les artères (41 à 46) de communication pour en extraire au moins certaines des informations d'état concernant le terminal (11).

14. Procédé selon la revendication 13, dans lequel les sondes (51 à 56) analysent au moins l'une des signalisations suivantes :
- requête de création de contexte de liaison,
- requête de mise à jour de contexte de liaison,
- requête d'effacement de contexte de liaison,
- requête de notification PDU,
- requête d'émission d'informations de routage réseau,
- requête pour noter qu'un terminal est à nouveau joignable,
- requête d'identification, et
- requête de contexte SGSN.

15. Procédé selon l'une des revendications 13 et 14, dans lequel les divers messages étant transmis selon divers protocoles, les sondes (51 à 56) identifient un protocole utilisé.

16. Procédé selon l'une des revendications 5 et 6, dans lequel le gestionnaire (2) requiert du réseau (1) des informations d'état voulues.

17. Procédé selon la revendication 16, dans lequel le gestionnaire (2) commande, dans le réseau (1), la fourniture en retour d'informations de rafraîchissement d'informations d'état précédemment reçues.

18. Procédé selon l'une des revendications 16 et 17, dans lequel le gestionnaire (2) surveille, dans le réseau (1), la disponibilité des informations d'état et il commande le rafraîchissement en cas d'indisponibilité de certaines des informations d'état.

19. Procédé selon l'une des revendications 17 et 18, dans lequel le rafraîchissement n'est commandé qu'après réception, par le gestionnaire (2), d'une requête d'informations d'état provenant du serveur (3).

20. Procédé selon la revendication 19, dans lequel le gestionnaire (2) détermine une durée de stockage des informations dont il dispose et il n'en commande le rafraîchissement que si la durée de stockage dépasse un seuil de péremption.

21. Procédé selon l'une des revendications 16 à 20, dans lequel le rafraîchissement des informations d'état est commandé par envoi, dans le réseau (1), de stimuli d'activation du terminal (11).

22. Procédé selon la revendication 21, dans lequel les stimuli sont émis vers le terminal (11) pour l'activer afin de provoquer l'établissement d'un contexte d'une nouvelle liaison de données dans le réseau (1), et de détecter le contexte de liaison pour effectuer un rafraîchissement des informations d'état du réseau spécifiques au terminal (11).

23. Procédé selon la revendication 22, dans lequel les stimuli activent une application du terminal (11).

24. Procédé selon la revendication 23, dans lequel les stimuli activent une application SIM Toolkit.

25. Procédé selon l'une des revendications 23 et 24, dans lequel des stimuli de désactivation de l'application sont ultérieurement émis.

26. Procédé selon la revendication 22, dans lequel les stimuli atteignent d'abord un centre de commutation (17, 18) du réseau (1) et lui commandent de les transformer en un message émis d'activation du terminal (11), lui notifiant qu'il doit appeler un centre (17, 18), pour y récupérer des données.

27. Procédé selon l'une des revendications 1 à 26, dans lequel le serveur (3) est fonctionnellement intégré dans un réseau de signalisation sémaphore gérant le réseau téléphonique (1).

28. Procédé selon l'une des revendications 1 à 27, mis en oeuvre dans un réseau radio (1).

29. Gestionnaire d'informations d'état d'un réseau téléphonique (1) pour la mise en oeuvre du procédé de la revendication 1, comportant des moyens de gestion (21, 22, 23) agencés pour recevoir des informations d'état du réseau (1) et les retransmettre à des serveurs de données d'information (3).

30. Gestionnaire selon la revendication 29, comportant des moyens (21, 221) d'interrogation sur l'état du réseau.

31. Gestionnaire selon la revendication 30, comportant des moyens d'activation (21, 222) agencés pour lancer dans le réseau (1) des stimuli de rafraîchissement des informations d'état.

32. Gestionnaire selon l'une des revendications 29 à 31, comportant des moyens (21, 223) d'agrégation d'informations d'état du réseau, afin de fournir des données de synthèse de l'état du réseau.

33. Gestionnaire selon l'une des revendications 29 à 32, comportant des moyens (21, 224) d'intégration, dans le temps, d'informations d'état du réseau, afin de fournir des données de synthèse de l'état du réseau.
